# FASCICULE DE BREVET EUROPEEN

(11) **EP 1 759 912 B1**
(45) Date de publication et mention de la délivrance du brevet: **25.01.2012**
(21) Numéro de dépôt: 06119094.8
(22) Date de dépôt: 17.08.2006
(51) Int. Cl.: B60K 37/06, B60K 35/00

(54) **Centrale de commande de bord pour véhicule automobile**
Zentrale Bedieneinheit für ein Kraftfahrzeug
Control center for motor vehicle

(30) Priorité: 02.09.2005 FR 0509029
(43) Date de publication de la demande: 07.03.2007
(73) Titulaire: Valeo Systèmes Thermiques, 78321 Le Mesnil St Denis Cedex (FR)
(72) Inventeur: Le Gallic, Lan VALEO SYSTEMES THERMIQUES, 93370 Montfermeil (FR)
(74) Mandataire: Croonenbroek, Thomas Jakob

(56) Documents cités:
- EP-A- 1 228 917
- WO-A-03/080391
- DE-A1- 10 205 641
- DE-A1- 19 941 963

## Description

L'invention concerne une centrale commande de bord, notamment pour véhicule automobile.

On constate que de nombreux appareils de bords sont prévus dans les véhicules. Ces derniers intègrent pratiquement en série un lecteur de disques compacts couplé à un autoradio et une installation d'air climatisé. Des appareils comme un dispositif d'assistance à la navigation de type GPS (pour guidage par satellite) restent certes plus rares mais se répandent de plus en plus. Ces appareils s'ajoutent à ceux bien connu qui équipent depuis longtemps le véhicule comme la ventilation ou le chauffage.

Dès lors, on comprend l'utilité d'une centrale de commande permettant de commander les différents appareils de bord.

Les demandes de brevet européen publiées sous les numéros EP 0 701 926 A2 et EP 0 366 132 A2 par exemple décrivent des centrales de commande.

EP 0 366 132 A2 décrit ainsi un dispositif de commande dans lequel un unique commutateur est prévu pour sélectionner des groupes de fonctions intéressant des appareils de bord puis pour choisir une fonction particulière dans le groupe sélectionné. Le commutateur est prévu rotatif avec mouvement axial.

Ce dispositif entraîne des risques d'erreur à la sélection des fonctions, en particulier lorsque le nombre de fonctions est important. En outre, une fonction est finalement sélectionnée après un grand nombre de manipulations du commutateur. Ceci requiert une attention importante de la part du conducteur. En conséquence, cela constitue une distraction du conducteur qui peut être longue. On comprend que cela nuit à la sécurité.

EP 0 701 926 A2 décrit un dispositif de commande multifonction dans lequel une surface de commande est associée à un écran et permet de commander des fonctions telles que la climatisation, l'assistance à la navigation, les appareils audio et un téléphone mobile. Le dispositif décrit présente une surface de commande et un écran intégrés dans un même produit. Ceci nuit d'une part à l'intégration du dispositif dans un habitacle. D'autre part, le conducteur devra détourner son regard de la route et vraisemblablement tourner la tête pour lire l'écran. Cela nuit à la sécurité.

Une centrale de commande de bord incluant les caractéristiques du préambule de la revendication indépendante est connue du document JP-2001297645.

Dès lors, l'invention a pour but d'améliorer la situation en proposant une centrale de commande d'un genre nouveau dont la manipulation soit aisée tout en permettant l'accès à un grand nombre de fonctions.

L'invention part d'une centrale de commande de bord, notamment pour véhicule automobile, comprenant un organe de commande, des boutons, et un calculateur capable de répondre à l'actionnement des boutons en exécutant sélectivement des fonctions de commande d'appareils de bord.

L'invention prévoit que le calculateur est apte à piloter un organe d'affichage en vue d'une visualisation des boutons et à réagir à l'actionnement d'au moins un premier bouton en ré-affectant des fonctions de commande d'appareils de bord a de seconds boutons tout en rafraîchissant la visualisation des seconds boutons pour indiquer la fonction associée à ceux-ci.

Ainsi, il se crée un lien entre la visualisation des boutons et leur configuration géométrique discriminante qui permet au conducteur d'actionner les boutons sans les regarder. En outre, l'organe d'affichage peut être placé sous les yeux du conducteurs, par exemple au-dessus du volant, tandis que l'organe de commande peut être placé à porté de main, par exemple juste à côté du volant. On comprend que dans cette configuration le conducteur peut manipuler la centrale de commande tout en restant concentré sur la route. La sélection d'une fonction particulière reste simple même lorsque les fonctions sont prévues en grand nombre.

Les seconds boutons au moins sont agencés selon une configuration géométrique discriminante.

Dans un mode de réalisation particulier, les seconds boutons comprennent un organe de commande rotatif, dont la position est visualisée sur l'organe d'affichage.

Le calculateur est alors de préférence capable de réagir à une modification de position de l'organe de commande rotatif en modifiant la valeur d'un paramètre lié à la fonction de commande d'appareils de bord affectée à l'organe de commande rotatif tout en rafraîchissant la visualisation de l'organe de commande rotatif pour indiquer la valeur dudit paramètre.

L'organe de commande comprend au moins un couple de premiers boutons et une série de seconds boutons disposés à proximité dudit couple.

L'organe de commande comprend deux couples distincts disposés à proximité d'une première série de seconds boutons et d'une seconde série de seconds boutons.

De préférence, le premier bouton commande une fonction intéressant au moins un appareil parmi un dispositif de climatisation, un dispositif de communication, un dispositif de lecture audio, un dispositif d'assistance à la navigation et un dispositif de localisation du véhicule.

Dans tous les modes de réalisation, l'organe de commande comprend des moyens de détection aptes à détecter la présence d'un doigt à proximité d'un bouton, et le calculateur est capable de réagir à une telle détection en modifiant la visualisation du bouton sur l'organe d'affichage.

La détection peut être de type capacitive.

La modification de la visualisation comprend une mise en évidence du bouton.

La modification de la visualisation comprend alors une mise en évidence de la fonction affectée au bouton.

Dans un mode de réalisation particulier, le calculateur comprend au moins une interface pour obtenir d'un appareil de bord des données de fonctionnement et en ce que la calculateur est apte à réagir à une modification des données de fonctionnement en ré-affectant des fonctions de commande d'appareils de bord supplémentaires aux seconds boutons, et en rafraîchissant la visualisation des seconds boutons pour indiquer la fonction supplémentaire affectée à ceux-ci.

Dans un mode de réalisation particulièrement avantageux, le calculateur réagit à l'actionnement du premier bouton par la ré-affectation de fonctions intéressant un même appareil de bord particulier aux seconds boutons.

Dans tous les modes de réalisation, l'un au moins des boutons peut être de type poussoir.

Dans une première variante de réalisation, le calculateur est capable de répondre à l'actionnement d'un premier bouton en affectant aux seconds boutons une fonction intéressant un dispositif de climatisation avec des paramètres de fonctionnement du dispositif respectivement différents.

Dans une seconde variante de réalisation, de remplacement ou complémentaire, le calculateur est capable de répondre à l'actionnement d'un premier bouton en affectant aux seconds boutons une fonction commandant une lecture de différents disques optiques respectivement.

Dans une troisième variante de réalisation, de remplacement ou complémentaire, le calculateur est capable de répondre à l'actionnement d'un premier bouton en affectant aux seconds boutons une fonction commandant le positionnement d'un tuner radio sur des stations pré-enregistrées.

Dans une quatrième variante de réalisation, de remplacement ou complémentaire, le calculateur est capable de répondre à l'actionnement d'un premier bouton en affectant aux seconds boutons des fonctions parmi une fonction de type carnet d'adresses, dernière destination, nouvelle destination et carte géographique.

Dans une cinquième variante de réalisation, de remplacement ou complémentaire, le calculateur est capable de répondre à l'actionnement d'un premier bouton en affectant aux seconds boutons des fonctions parmi une fonction de type carnet de contacts, dernière numéro de téléphone composé, composition d'un numéro de téléphone et accès à une messagerie.

Dans tous les modes de réalisation, le premier bouton est avantageusement associé à une fonction particulière tandis que les seconds boutons sont associés à des sous-fonctions de ladite fonction particulière.

D'autres caractéristiques et avantages de l'invention apparaîtront à l'examen de la description détaillée ci-après, et des dessins annexés sur lesquels :
- la figure 1 est un schéma fonctionnel d'une centrale de commande selon l'invention,
- les figures 2 et 3 sont des schémas de la centrale de commande de la figure 1 dans des états de fonctionnement différents,
- la figure 4 est un ordinogramme illustrant le fonctionnement de la centrale de commande de la figure 1,
- la figure 5 représente fonctionnellement un organe de commande pour la centrale de commande de la figure 1,
- les figures 6 et 7 illustrent l'affichage d'un organe d'affichage pour la centrale de commande de la figure 1 dans un premier état de fonctionnement,
- la figure 8 représente un organe de commande analogue à celui de la figure 5 dans un état de fonctionnement différent,
- la figure 9 illustre l'affichage de l'organe d'affichage pour la centrale de commande dans l'état de fonctionnement de la figure 8,
- la figure 10 représente un organe de commande analogue à la figure 5 dans un autre état de fonctionnement encore,
- les figures 11 et 12 représentent respectivement un organe de commande et l'affichage d'un organe d'affichage, la centrale de commande étant dans un autre état de fonctionnement encore,
- les figures 13 et 14 représentent respectivement un organe de commande et l'affichage d'un organe d'affichage, la centrale de commande étant dans un autre état de fonctionnement encore,
- les figures 15 et 16 représentent respectivement un organe de commande et l'affichage d'un organe d'affichage, la centrale de commande de bord étant dans un même état de fonctionnement que sur les figures 13 et 14,
- la figure 17 représente un organe de commande, la centrale de commande de bord étant dans un même état de fonctionnement que sur la figure 15,
- les figures 18 et 19 représentent un organe de commande, la centrale de commande de bord étant dans un même état de fonctionnement que sur la figure 11,
- la figure 20 est un schéma fonctionnel d'un mode de réalisation particulier d'un bouton pour un organe de commande selon l'invention,
- la figure 21 illustre l'affichage d'un organe d'affichage coopérant avec un bouton selon le mode de réalisation de la figure 20,
- la figure 22 illustre l'affichage d'un organe d'affichage coopérant avec un bouton selon le mode de réalisation de la figure 20 dans une autre forme de réalisation de bouton,
- la figure 23 est une vue en perspective d'un organe de commande dans un mode de réalisation particulier,
- la figure 24 illustre en détail un bouton d'un organe de commande dans le mode de réalisation de la figure 23, et
- les figures 25 à 26 illustrent des variantes de réalisation de la centrale de commande selon l'invention.

Les dessins annexés pourront, non seulement servir à compléter l'invention, mais aussi contribuer à sa définition, le cas échéant.

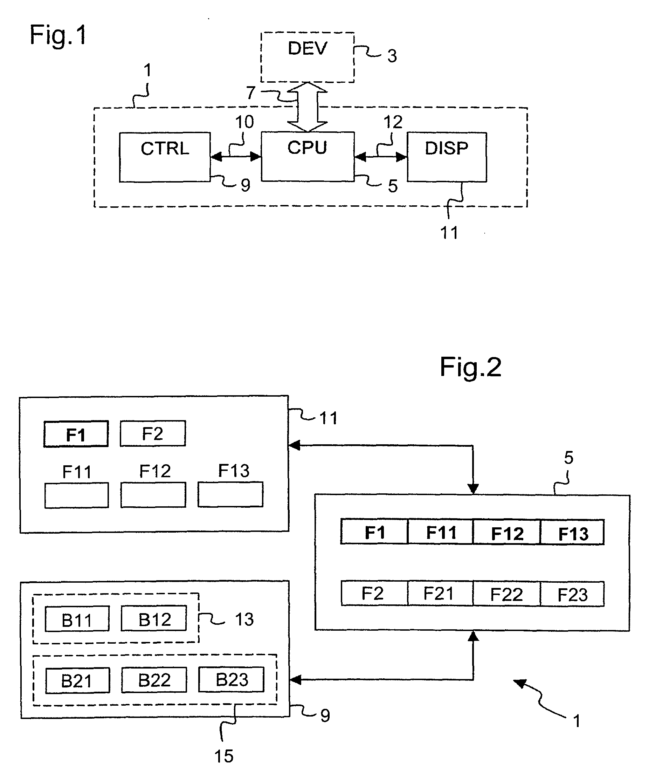

La figure 1 illustre une centrale de commande de bord 1, par exemple pour un véhicule automobile.

La centrale de commande 1 a pour fonction la commande d'appareils de bord (DEV) 3. En particulier, la centrale de commande 1 permet la commande des appareils 3 par un utilisateur, notamment le conducteur d'un véhicule automobile, en interagissant avec celui-ci.

Le terme "appareils de bord" se rapporte ici à tout dispositif embarqué dans le véhicule et susceptible d'interagir, pour quel motif que ce soit, avec un utilisateur. Un dispositif de chauffage, de ventilation et/ou d'air conditionné, un dispositif de communication, par exemple de téléphonie mobile, un dispositif de diffusion audio, du type autoradio, lecteur de disques compacts par exemple, ou encore un dispositif d'assistance à la navigation et/ou à la localisation comme un dispositif de guidage par satellite sont des exemple d'appareils de bord 3 susceptibles d'être commandés par la centrale de commande 1. Ainsi, les appareils 3 de la figure 1 peuvent comprendre un ou plusieurs des dispositifs précités, pris séparément ou en combinaison.

La centrale de commande 1 comprend un calculateur 5 (CPU) capable d'exécuter des instructions de commande pour les appareils 3. Ces instructions peuvent être organisées en fonctions. Il s'agit par exemple d'une suite ordonnée d'instructions. Le terme fonction doit être compris ici dans son acception la plus large : ce terme ne fait pas nécessairement référence à une fonction informatique ou mathématique.

Le calculateur 5 peut comprendre un microcontrôleur, par exemple de type 8 bits, 16 bits, 32 bits ou 64 bits. D'autres modèles de calculateurs peuvent être utilisés.

Le calculateur 5 est relié aux différents appareils 3 par l'intermédiaire d'une liaison d'échange de signaux 7. La liaison 7 est ici de type BUS, et plus particulièrement BUS CAN à haut débit.

La centrale de commande 1 comprend en outre un organe de commande 9 (CTRL) utilisable par un utilisateur. En particulier l'organe de commande 9 présente des boutons pouvant être actionnés par l'utilisateur.

L'organe de commande 9 est relié au calculateur 5 par une liaison d'échange de signaux 10. Par exemple, la liaison 10 peut être de type BUS, plus particulièrement de type bus local et encore plus particulièrement de type Lin/Can.

Les signaux reçus de l'organe de commande 9 constituent des entrées du calculateur 5. Le calculateur 5 est ainsi capable de répondre à l'actionnement des boutons en exécutant sélectivement des fonctions de commande intéressant les appareils 3. Parce qu'il permet la commande des appareils 3 par un utilisateur, le calculateur 5 est parfois désigné calculateur d'interface homme machine. On comprend que pour cette même raison, la centrale de commande 1 peut être qualifiée de système d'interface homme machine.

De préférence, l'organe de commande 9 est agencé de manière à s'intégrer facilement dans l'habitacle du véhicule, par exemple au niveau du tableau de bord. L'organe de contrôle 9 est avantageusement configuré de manière à pouvoir être disposé à proximité du poste de conduite, par exemple à proximité du volant ou du levier de vitesses. Ainsi, le conducteur peut actionner les boutons de l'organe de commande 9 tout en conduisant.

La centrale de commande 1 comprend également un dispositif d'affichage 11 (DISP) relié au calculateur 5 par une liaison d'échange de signaux 12. L'organe d'affichage 11 peut comprendre un écran à cristaux liquides (couleur ou monochrome). Un dispositif d'affichage d'informations au niveau du pare-brise pourrait également être employé en tant qu'organe d'affichage 11. De tels dispositifs sont appelés afficheurs ou écrans "tête haute". De préférence, l'organe d'affichage 11 est agencé de manière à pouvoir être intégré dans l'habitacle, avantageusement à proximité visuelle immédiate du conducteur pour que ce dernier n'ait pas à détourner son regard de la route.

Des liaisons de type vidéo composite ou numérique à trois couleurs rouge vert et bleu sont des exemples de liaison 12 pouvant être mises en oeuvre entre le calculateur 5 et l'organe d'affichage 11. On comprend que le choix du type de liaison peut dépendre au moins en partie du type d'organe d'affichage 11 utilisé.

Le calculateur 5 est capable de piloter l'organe d'affichage 11 en provoquant l'affichage d'informations sur cet organe. Parce qu'il gère en outre l'affichage du dispositif d'affichage 11, le calculateur 5 peut être ici qualifié de "calculateur logique et graphique".

La liaison 12 est généralement unidirectionnelle. Toutefois, cette liaison 12 peut être dans certains cas bidirectionnelle, par exemple lorsque le dispositif d'affichage 11 comprend un écran de type tactile relié en tant qu'entrée au calculateur 5.

La figure 2 illustre schématiquement et fonctionnellement la centrale de commande 1 de la figure 1, dans un exemple de réalisation simplifié.

Ici, l'organe de commande 9 présente physiquement des premiers boutons B11 et B12 désignés dans leur ensemble par la référence numérique 13 et des seconds boutons B21, B22 et B23 désignés dans leur ensemble par la référence numérique 15. Les seconds boutons 15 sont agencés selon une configuration géométrique discriminante, en particulier par rapport aux premiers boutons 13. On signifie par là qu'un utilisateur de l'organe de commande 9 peut aisément distinguer les premiers boutons et les seconds boutons 15 notamment de par leur positionnement relatif. Cette distinction peut être visuelle et/ou tactile. De préférence, la forme des premiers boutons 13 et des seconds boutons 15 peut être essentiellement différente pour renforcer la distinction.

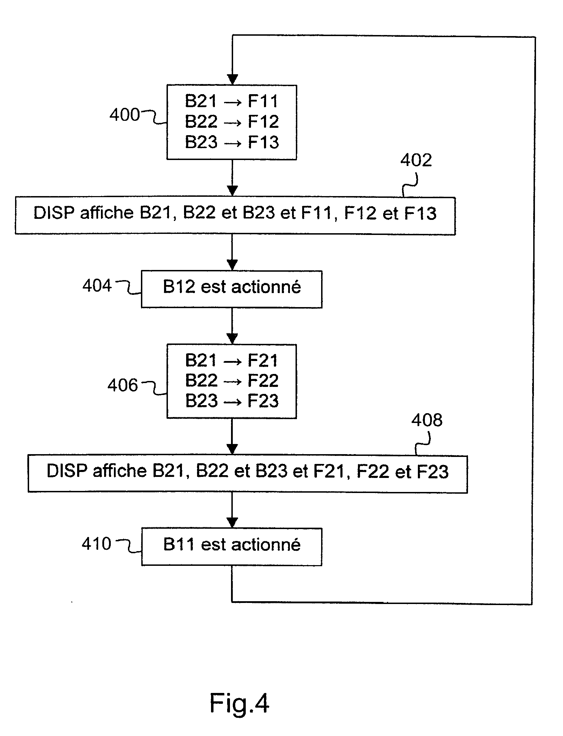

Les seconds boutons 15 sont respectivement associés à des fonctions F11, F12 et F13 pouvant être exécutées sélectivement par le calculateur 5. Autrement dit, le calculateur 5 est capable de réagir à l'actionnement d'un des seconds boutons 15, par exemple le bouton B22, en exécutant l'une des fonctions F11, F12 et F13, par exemple la fonction F12. Cet état de fonctionnement de la centrale de commande 1 est illustré par l'étape 400 de la figure 4, laquelle illustre le fonctionnement du calculateur 5 dans cet exemple de réalisation simplifié.

Le calculateur 5 est en outre capable de piloter l'organe d'affichage 11 de manière à afficher une visualisation des seconds boutons 15 conforme à leur configuration géométrique discriminante sur l'organe de commande 9. En outre, le calculateur 5 provoque l'affichage d'un identifiant (ici F11, F12 et/ou F13) de la fonction associée à chacun des seconds boutons 15. Ceci correspond à l'étape 402 de la figure 4. Ici, la forme des seconds boutons 15 a été reprise pour la visualisation des boutons sur l'organe d'affichage 11. On comprend que la forme des seconds boutons 15 visualisée sur l'organe d'affichage 11 peut être sensiblement différente de la forme des seconds boutons 15, en particulier elle peut être simplifiée ou schématisée.

Le calculateur 5 pilote l'organe d'affichage 11 de manière à générer une visualisation des premiers boutons B11 et B12 conforme à leur configuration géométrique. Le calculateur 5 commande également la visualisation d'un identifiant F1 d'une fonction F1 associée au bouton B11 et d'un identifiant F2 d'une fonction F2 associée au bouton B12. Comme précédemment,"associer" signifie que le calculateur 5 est capable de réagir à l'actionnement du bouton B11 (respectivement B12) par l'exécution de la fonction F1 (respectivement F2). Ici aussi, la visualisation des boutons B11 et B12 reprend la forme géométrique de ceux-ci.

Le calculateur 5 est agencé de manière à répondre à l'actionnement (étape 404) du bouton B12 en réaffectant les fonctions associées aux premiers boutons 15. Ceci peut être vu comme l'exécution d'une partie au moins de la fonction F2 associée au bouton B12.

En particulier, le calculateur 5 affecte une fonction F21 au bouton B21, une fonction F22 au bouton B22 et une fonction F23 au bouton B23 comme l'indique l'étape 406 de l'ordinogramme de la figure 4.

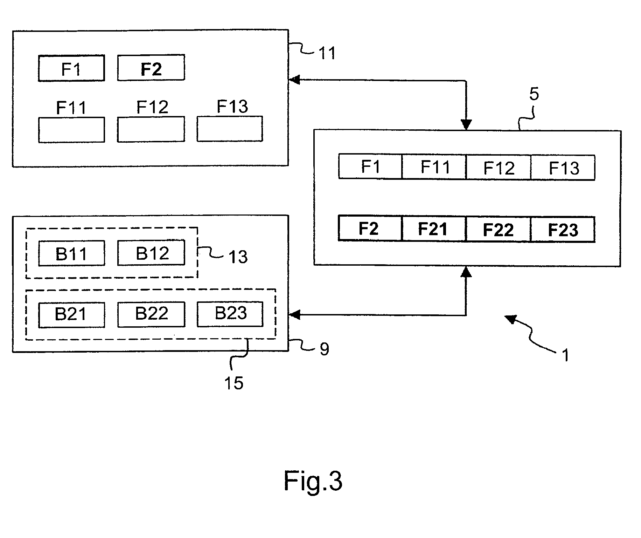

Le calculateur 5 est en outre configuré de manière à réagir à l'actionnement du bouton B12 par le rafraîchissement de la visualisation de l'organe d'affichage 11 de manière à visualiser les identifiants des fonctions F21, F22 et F23 nouvellement affectées aux boutons B21, B22 et B23 (étape 408). Cela est visible sur la figure 3.

Les figures 2 et 3 montrent que le calculateur 5 est capable de piloter l'organe d'affichage 9 de manière à obtenir une visualisation du premier bouton actionné et de la fonction associée mise en évidence. Sur ces figures, le premier bouton actionné (B11 sur la figure 2 et B12 sur la figure 3) a été représenté en trait épais. En pratique, la mise en évidence de la visualisation des boutons peut être réalisée par une mise en surbrillance (augmentation de contraste), un changement de couleur, un grossissement ou tout autre effet graphique.

On comprend que le calculateur 5 est agencé de manière à réagir à l'actionnement du bouton B11 à l'étape 410 de la figure 4 en réaffectant les fonctions F11, F12 et F13 aux boutons B21, B22 et B23 respectivement ainsi qu'en pilotant le rafraîchissant de l'affichage de l'organe d'affichage 11. Autrement dit, l'actionnement du bouton B11 provoque visuellement le passage de l'affichage de l'organe d'affichage 11 de la figure 3 à celui de la figure 2.

La centrale de commande 1 représentée sur les figures 2 et 3 bien que simplifiée offre une commande aisée pour un ensemble de fonctions par une organisation hiérarchique de ces fonctions. En conséquence, même lorsque ces fonctions sont prévues en nombre, l'utilisateur peut les commander facilement grâce à l'organe de commande 9. La manipulation de cet organe de commande 9 couplé au dispositif d'affichage 11 rend l'utilisation de la centrale de commande 1 simple et intuitive, autorisant ainsi des utilisateurs non expérimentés à comprendre et à utiliser rapidement le système.

Grâce à la discrimination géométrique des seconds boutons 15 et, de préférence également des premiers boutons 13 également, et à sa visualisation sur l'organe d'affichage 11, l'utilisateur n'a pas à regarder à la fois l'organe de commande 9 et le dispositif d'affichage 11. Plus exactement, l'utilisateur n'a pas à regarder l'organe de commande 9 pour actionner de boutons. En conséquence, l'organe d'affichage 11 peut être déporté de l'organe de commande 9. Il en découle notamment une intégration de la centrale de commande 1 dans l'habitacle plus aisée ainsi qu'une plus grande sécurité lors de la manipulation de cette dernière.

Dans certains modes de réalisation, la visualisation des seconds boutons en tant que tels sur l'organe d'affichage 11 pourrait être omise et remplacée uniquement par les indications d'identifiants de fonctions associées aux boutons dans une configuration géométrique correspondante à la configuration géométrique de ces boutons sur l'organe de commande 9.

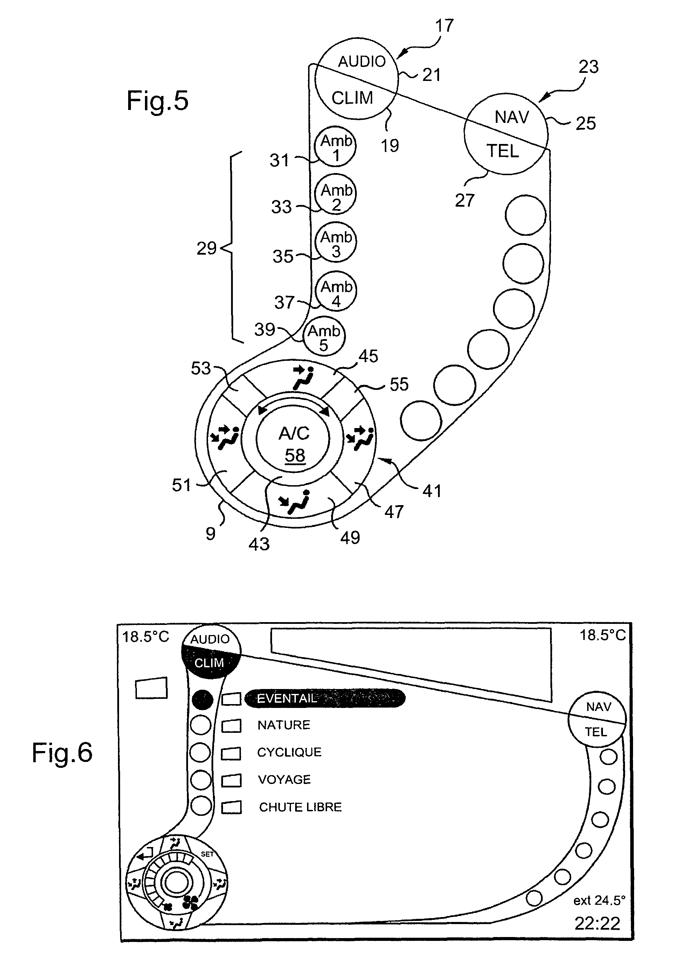

La figure 5 illustre un mode de réalisation pratique de la centrale de commande 1 selon l'invention. L'organe de commande 9 illustré sur cette figure 5 comprend un premier couple 17 de premiers boutons 19 et 21 et un second couple 23 de premiers boutons 25 et 27.

L'organe de commande 9 comprend une première série 29 de seconds boutons 31, 33, 35, 37 et 39 disposés suivant une courbe. La première série 29 est agencée dans une configuration géométrique discriminante par rapport aux premiers boutons 19 et 21 tout en étant agencés à proximité de ces derniers.

Comme le montre fonctionnellement la figure 5, Le premier bouton 19 est associé à une fonction "CLIM" intéressant la commande d'un appareil (ou d'un ensemble d'appareils) de chauffage, ventilation et/ou climatisation (HVAC). L'appareil HVAC s'entend ici au sens large et peut ainsi comprendre un ventilateur, un radiateur, un climatiseur etc. En conséquence, les fonctions associées aux boutons de la série 29 sont également des fonctions intéressant la commande d'un appareil HVAC. Comme précédemment, une fonction est dite "associée à un bouton" lorsque le calculateur 5 est agencé pour réagir à l'actionnement de ce bouton en exécutant ladite fonction.

Par exemple, le bouton 31 est associé à une fonction "Amb1". De même, les boutons 33, 35, 37 et 39 sont respectivement associés à des fonctions "Amb2", "Amb3", "Amb4" et "Amb5". Ces fonctions peuvent chacune associer des valeurs différentes de paramètres de fonctionnement de l'appareil de climatisation, en particulier, ces valeurs peuvent être prédéfinies. Par exemple ces paramètres peuvent comprendre une vitesse de rotation d'un ventilateur, une température d'air soufflé dans l'habitacle, une circulation d'air recyclée ou ouverte sur l'extérieur, etc. Ici, l'acronyme "Amb" définit une ambiance particulière associée à un bouton respectif.

La figure 6 montre la visualisation des boutons 19 et 21, de la série 29 et d'identifiants des fonctions associées aux différents boutons affichée sur l'organe d'affichage 11 et pilotée par le calculateur 5. Elle comprend une visualisation du bouton 19 et un identifiant "CLIM" de la fonction climatisation mis en évidence par un effet graphique de suréclairage. D'autres moyens de mise en évidence du bouton 19 peuvent également être employés.

Le calculateur 5 est agencé pour commander une visualisation des boutons de la série 29 telle que les boutons 31, 33, 35, 37 et 39 sont visualisés sensiblement selon leur disposition géométrique sur l'organe de commande 9. Les identifiants des fonctions associées à ces boutons (respectivement, "EVENTAIL", "NATURE", "CYCLIQUE", "VOYAGE" et "CHUTE LIBRE") sont choisis manière à être facilement intelligible pour l'utilisateur.

Dans ce mode de réalisation, le calculateur 5 est en outre agencé de manière à piloter une visualisation des boutons 21, 25 et 27 sur l'organe d'affichage 9 conforme à la disposition spatiale de ces derniers sur l'organe d'affichage 9. Cette visualisation comprend en outre des identifiants de fonctions associées aux boutons 21, 25 et 27, soit respectivement "AUDIO", "NAV" et "TEL".

Dans ce mode de réalisation, l'organe de commande 9 comprend en outre un ensemble de seconds boutons supplémentaires 41. Il présente notamment un organe de commande rotatif 43 et des seconds boutons supplémentaires 45, 47, 49, 51, 53, 55 et 58.

Comme le montre la figure 5, les seconds boutons supplémentaires 45, 47, 49 et 51 sont par exemple également répartis autour de l'organe de commande rotatif 43. Les seconds boutons supplémentaires 53 et 55 sont par exemple disposés de part et d'autre du bouton 45 tandis qu'un second bouton supplémentaire central 58 est disposé sensiblement au centre de l'ensemble de seconds boutons 41.

Ces seconds boutons supplémentaires 41 sont disposés selon une configuration spatiale distinctive au sens exposé plus haut. En particulier l'ensemble de boutons 41 présente une allure ronde tandis que la série 29 de seconds boutons présente une allure longiligne. En outre l'ensemble 41 est disposé à proximité d'une extrémité de la série 29, ici de l'extrémité opposée à l'extrémité proche du premier couple 17.

Le calculateur 5 pilote l'organe d'affichage 11 de manière à visualiser l'ensemble 41 et les boutons qu'il comprend, conformément à leur configuration géométrique distinctive et à leur allure.

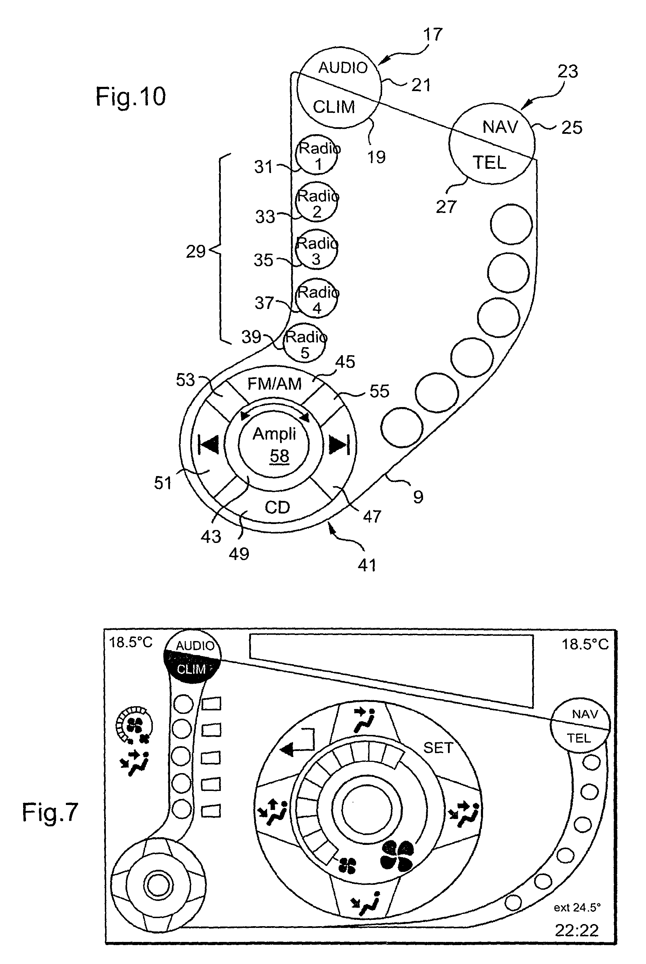

Le contrôleur 5 est susceptible de réagir à l'actionnement l'organe de commande rotatif 43 en associant à une fonction particulière la valeur d'un paramètre de cette fonction. Dans ce mode de réalisation, le calculateur 5 est agencé de manière à associer une valeur d'un paramètre lié à une vitesse de rotation d'un ventilateur à la position de l'organe de commande rotatif 43. Comme le montre la figure 7, le calculateur 5 pilote l'organe d'affichage 11 de manière à représenter différentes positions de l'organe de commande rotatif 43.

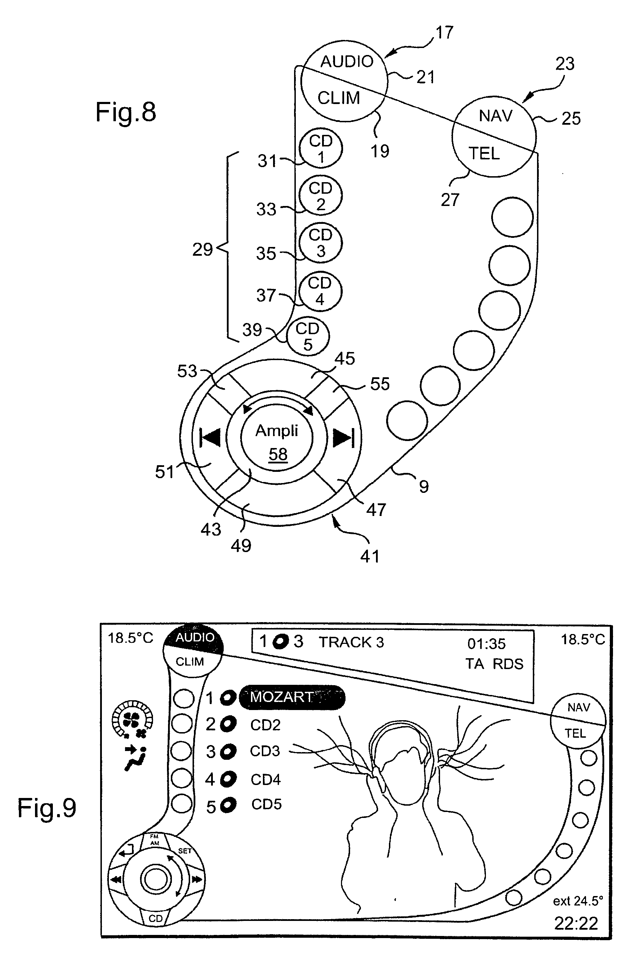

Sur la figure 8, le premier bouton 21 associé à une fonction "AUDIO" est actionné en sorte que le calculateur 5 réagit en réaffectant à la série 29 des fonctions intéressant un ou plusieurs appareils de type audio.

Dans ce mode de réalisation, les appareils de type audio comprennent un lecteur de disques compacts. Le calculateur 5 est ainsi capable de régir à l'actionnement du bouton 31 en exécutant une fonction "CD1" commandant le chargement d'un premier disque compact d'un chargeur de disques dans le lecteur de disques compacts.

La figure 9 illustre l'affichage de l'organe d'affichage 11 correspondant. La visualisation du bouton 31 sur ledit organe est associée à identifiant "MOZART" correspondant à la fonction "CD1". L'identifiant de fonction prend ici la forme d'une information concernant le premier disque, en particulier le nom du compositeur des oeuvres enregistrées.

Le calculateur 5 est capable d'associer à chaque position de l'organe 43 une valeur d'un paramètre lié au niveau sonore d'un dispositif d'amplification.

Le calculateur 5 est apte à réagir à l'actionnement du bouton 21 en réaffectant en outre des fonctions à l'ensemble 41 de seconds boutons supplémentaires. Par exemple, une fonction "FM/AM" est associée au second bouton supplémentaire 45. Le calculateur 5 est agencé de manière à réagir à l'actionnement de ce bouton 45 en réaffectant des fonctions à la série de boutons 29, comme indiqué sur la figure 10. Sur cette figure, à chaque bouton de la série 29 est associée un fonction provoquant le position d'un tuner radio sur une fréquence préréglée d'une station de radio. Par exemple, une fonction "RADI01" est associée au bouton 31. Bien que cela ne soit pas représenté ici, on comprendra que l'affichage de l'organe d'affichage 11 est modifié par le calculateur 5 de manière à afficher un identifiant de station radio à proximité de la visualisation du bouton 31.

On fait maintenant référence à nouveau à la figure 8. Une fonction provoquant la lecture d'une piste suivant (respectivement précédant) la piste en cours de lecture est associée au bouton 47, respectivement 51. Un identifiant visuel de fonction peut comprendre un pictogramme au lieu d'une suite de caractères alphanumériques. Le calculateur 5 est agencé pour réagir à l'actionnement du bouton 49 par le basculement de la source récepteur radio vers la source lecteur de disques compacts. S'il existe plusieurs appareil de type lecteur de disques compacts (par exemple un lecteur et un chargeur), le calculateur 5 peut être agencé pour réagir à l'appui successif sur le bouton 49 par le basculement de la source audio entre le récepteur radio et les différents appareils à disques compacts.

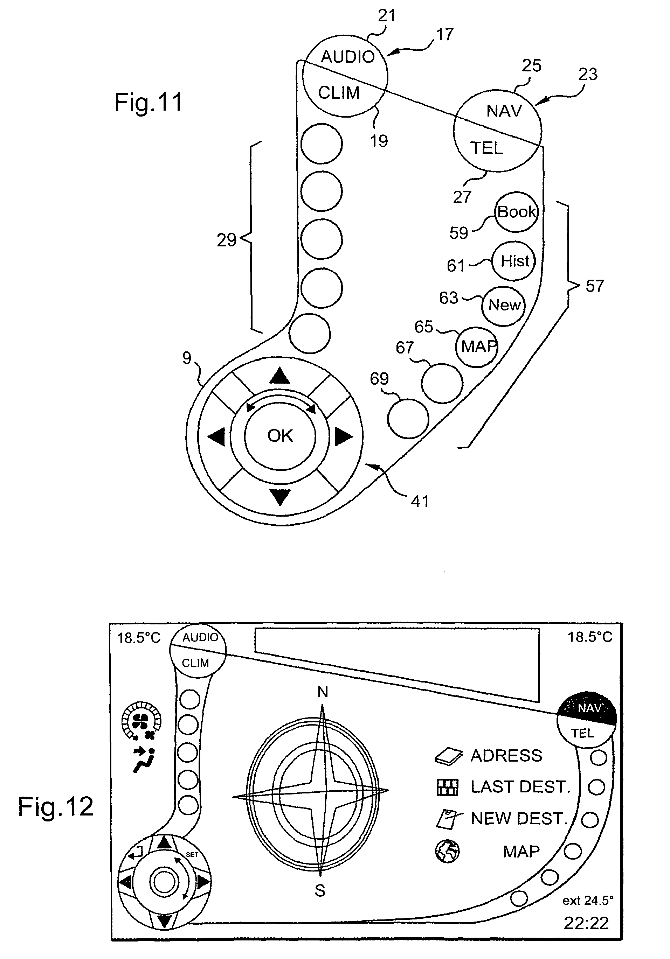

Comme le montre la figure 11, l'organe de contrôle 9 comprend une seconde série 57 de boutons 59, 61, 63, 65, 67 et 69. Au premier bouton 25 est associée une fonction "NAV". Le calculateur 5 est agencé de manière à réagir à l'actionnement du bouton 25 en affectant aux boutons de la seconde série 57 des fonctions intéressant le contrôle d'un dispositif d'assistance à la navigation, par exemple de type GPS. En particulier, l'actionnement du bouton 25 fait affecter par le calculateur 5 une fonction "BOOK" au bouton 59, une fonction "HIST" au bouton 61, une fonction "NEW" au bouton 63 et une fonction "MAP" au bouton 65. On remarque que le calculateur 5 n'affecte pas de fonction aux boutons 67 et 69.

Le calculateur 5 pilote l'organe d'affichage 11 de manière à produire une visualisation des boutons de la série 57 et d'identifiants des fonctions associées comme représenté sur la figure 12. Le bouton 59 est visuellement associé à l'identifiant "ADDRESS", le bouton 61 à "LAST DEST.", le bouton 63 à "NEW DEST" et le bouton 65 à "MAP". Les boutons 67 et 69 sont visualisés sur l'organe d'affichage 11 mais aucun identifiant de fonction n'est visuellement associé à ces boutons.

La fonction "BOOK" conditionne la gestion d'un carnet d'adresses de destination mémorisé dans une mémoire prévue dans le véhicule. La fonction "HIST" donne accès aux dernières destinations entrées dans le dispositif d'aide à la navigation. La fonction "NEW" conditionne l'entrée d'une nouvelle destination pour la recherche d'un nouveau trajet. La fonction "MAP" conditionne l'affichage d'une carte routière, par exemple sur le même organe d'affichage 11. Encore une fois, on remarque que les identifiants visuels sont choisis de manière à être facilement intelligible à l'utilisateur.

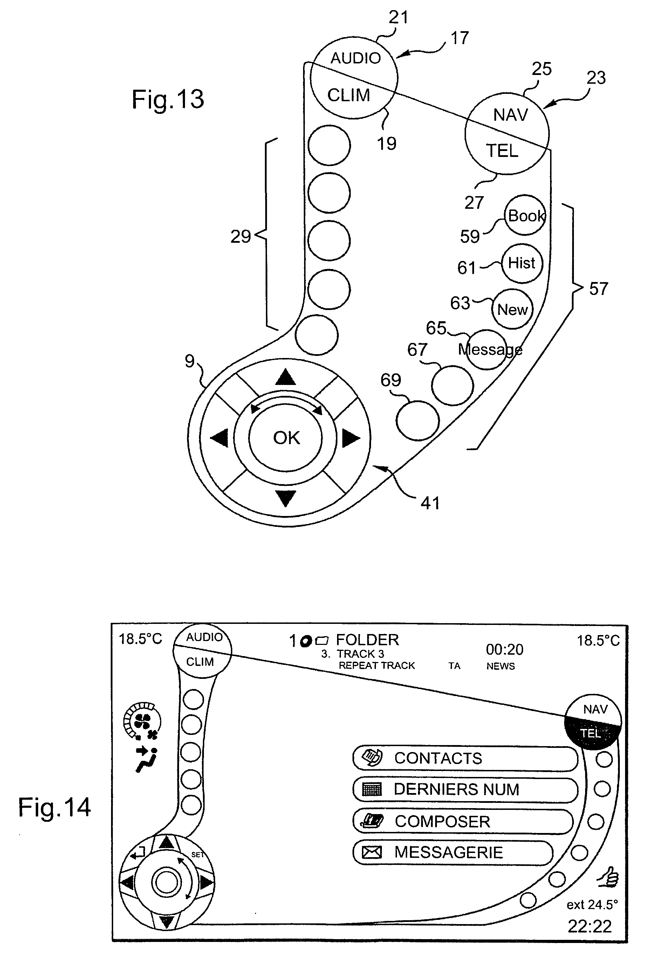

Sur les figures 13 et 14, le bouton 27 est activé auquel est associée une fonction "TEL" intéressant un dispositif de téléphonie mobile. Une fonction "BOOK" de consultation d'un carnet d'adresses de contacts visuellement identifiée "CONTACTS" est associée au bouton 59. Une fonction "HIST" provoquant l'affichage de derniers numéros appelés visuellement identifiée "DERNIERS NUM." est associée au bouton 61. Une fonction "NEW" commandant la composition d'un nouveau numéro de téléphone visuellement identifiée "COMPOSER" est associée au bouton 63. Enfin, une fonction "MESSAGE" donnant accès à des messages reçus visuellement identifiée "MESSAGERIE" est associée au bouton 65.

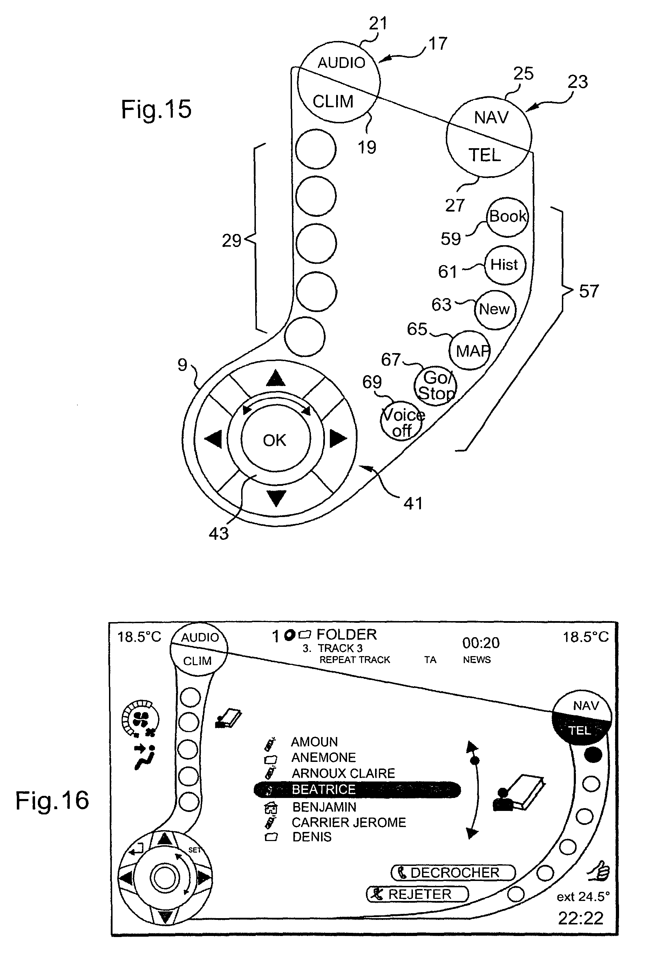

Le calculateur 5 est agencé de manière à réagir à l'actionnement du bouton 59 en affectant au variateur de position 43 une fonction de navigation dans une liste de contacts comme illustré sur les figures 15 et 16.

En outre, le calculateur 5 est capable d'interagir avec des moyens de détection d'appels du dispositif de téléphonie mobile et de réagir à la détection d'un appel entrant en affectant aux boutons 67 et 69 des fonctions "HOOK OFF" et "REJECT" tout en pilotant le rafraîchissement de l'affichage de l'organe d'affichage 11 de manière à visualiser ces deux nouvelles fonctions (visuellement identifiées "DECROCHER" et "REJETER") nouvellement associées aux visualisations des boutons 67 et 69.

La fonction "HOOK OFF" commande le décrochage du dispositif de téléphonie mobile tandis que la fonction "REJECT" commande le rejet de l'appel.

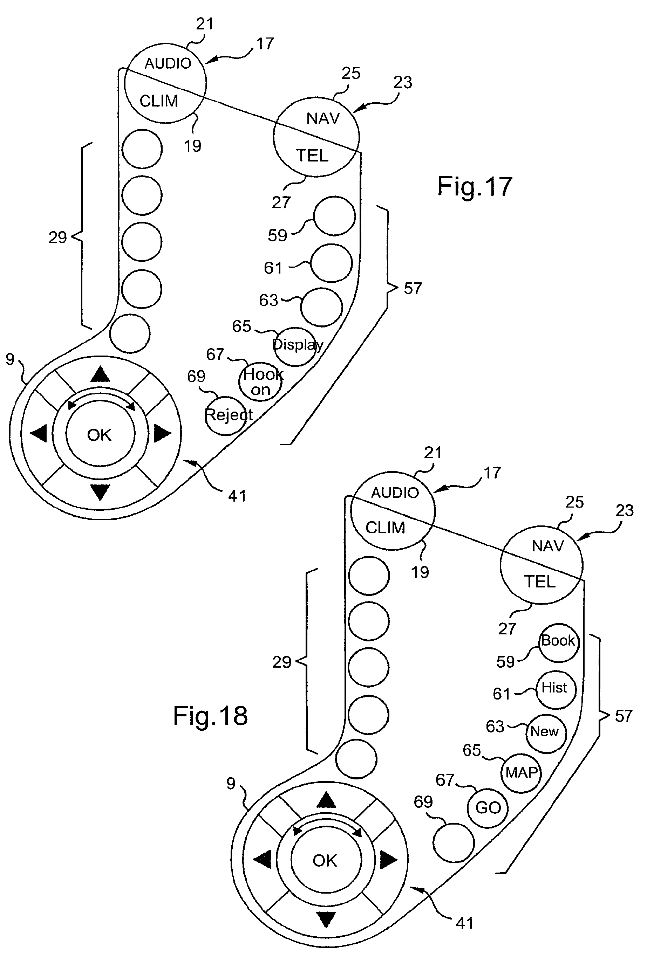

Le calculateur 5 est capable de réagir à l'actionnement du bouton 67 (prise d'un appel détecté) en affectant au bouton 65 une fonction "DISPLAY", au bouton 67 une fonction "HOOK ON" et au bouton 69 la même fonction "REJECT" que précédemment, comme indiqué sur la figure 17. La fonction "DISPLAY" bascule l'affichage entre les différentes types d'informations propre au dispositif de téléphonie, par exemple la durée d'un appel, l'heure d'un appel, le numéro appelé etc. La fonction "HOOK ON" commande le raccrochage du dispositif de téléphonie mobile.

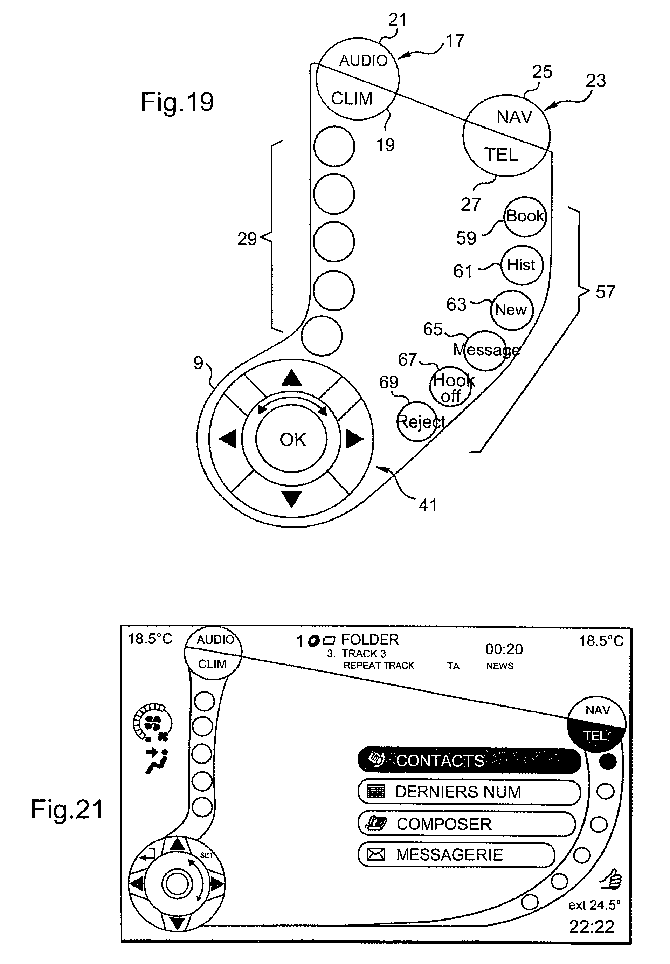

Les fonctions affectées aux différents boutons peuvent être conditionnées par la détection d'un contexte de fonctionnement. Sur les figures 18 et 19 par exemple les fonctions affectées aux boutons 67 et 69 par le calculateur 5 dépendent d'un état de fonctionnement du dispositif d'aide à la navigation. Sur la figure 18, le bouton 67 est associé à une fonction "GO" démarrant un guidage à proprement parler vers une destination choisie. Le calculateur 5 est agencé de manière à réagir à l'actionnement du bouton 67 en associant une fonction "GO/STOP" et du bouton 69 en associant une fonction "VOICE OFF". La fonction "GO/STOP" commande alternativement la reprise et la suspension du guidage. La fonction "VOICE OFF" commande la désactivation d'une éventuelle aide sonore pour le guidage.

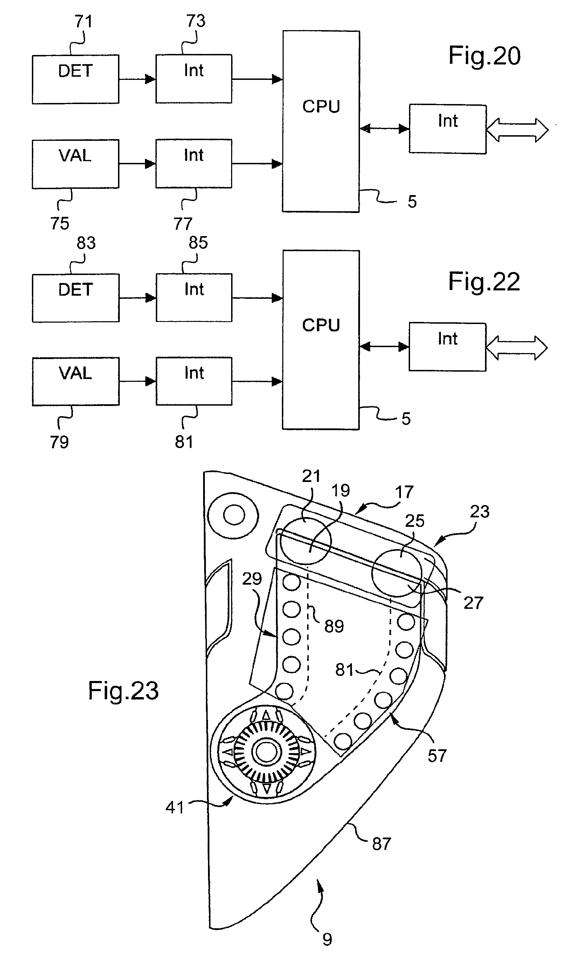

Dans un mode de réalisation de l'invention particulièrement avantageux illustré sur la figure 20, la centrale de commande 1 comprend en outre des moyens de détection de présence 71 (DET) capables de détecter la présence d'un doigt au voisinage de l'un des boutons de l'organe de commande 9. Les moyens de détection de présence 71 sont reliés au calculateur 5 par l'intermédiaire d'une interface 73. Le calculateur 5 est agencé de manière à réagir à la détection d'un doigt à proximité immédiate d'un bouton en pilotant l'organe d'affichage 11 de manière à mettre en évidence la visualisation dudit bouton, et le cas échéant de l'identifiant de fonction associé. Par exemple, la figure 21 illustre la conséquence d'une détection d'un doigt au niveau du bouton 59 lorsque le bouton 27 est actionné. On remarque ainsi un changement de couleur d'une zone de l'affichage entourant l'identifiant de fonction ainsi qu'un effet de suréclairage sur la visualisation du bouton 59.

La centrale de commande 1 comprend en outre des moyens de validation 75 reliés au calculateur 5 par l'intermédiaire d'une interface 77. Le calculateur 5 est agencé de manière à réagir à la détection d'une validation en exécutant la fonction associée au bouton au niveau duquel un doigt a été préalablement détecté.

La validation peut être commandée par appui sur une touche du bouton ou par une impulsion sur une zone sensitive selon la réalisation dudit bouton.

Dans un mode de réalisation particulièrement avantageux, les moyens de détection 71 et les moyens de validation 77 comprennent respectivement des dispositifs de détection et des dispositifs de validation propres à chaque bouton.

Le dispositif de détection peut être de type capacitif. Par exemple, il est possible de prévoir une surface métallique dont la capacité est mesurée par des moyens adéquats à proximité de la zone du bouton manipulée. Les moyens de mesure de capacité sont capables de détecter une variation de capacité due à la présence d'un doigt. Cette surface métallique peut être agencée sous une touche mobile en translation actionnant en fin de course un commutateur pour former un bouton à fonctions de validation et de détection sous forme de bouton-poussoir.

De même, comme indiqué en figure 22, la centrale de commande 1 peut comprendre en outre des moyens de réglage de fonction 79 reliés au calculateur 5 par l'intermédiaire d'une interface 81 et couplés à des moyens de détection de présence d'un doigt 83 reliés au calculateur 5 par une interface 85. Le calculateur 5 est agencé de manière à réagir à une détection d'un changement de position au niveau d'un organe de commande rotatif au niveau duquel un doigt a préalablement été détecté en faisant varier la valeur d'un paramètre associé à l'organe.

Dans un mode de réalisation particulièrement avantageux, les moyens de détection 83 et les moyens de validation 79 comprennent respectivement des dispositifs de détection et des dispositifs de validation propres à chaque organe.

L'organe de commande rotatif 43 peut comprendre une partie rotative pouvant être manipulée par l'utilisateur et couplée à une surface métallique dont la capacité est mesurée par des moyens adéquats. Ces moyens sont capables de réagir à une variation de la capacité de la surface métallique provoquée par la présence d'un doigt à proximité de la partie rotative.

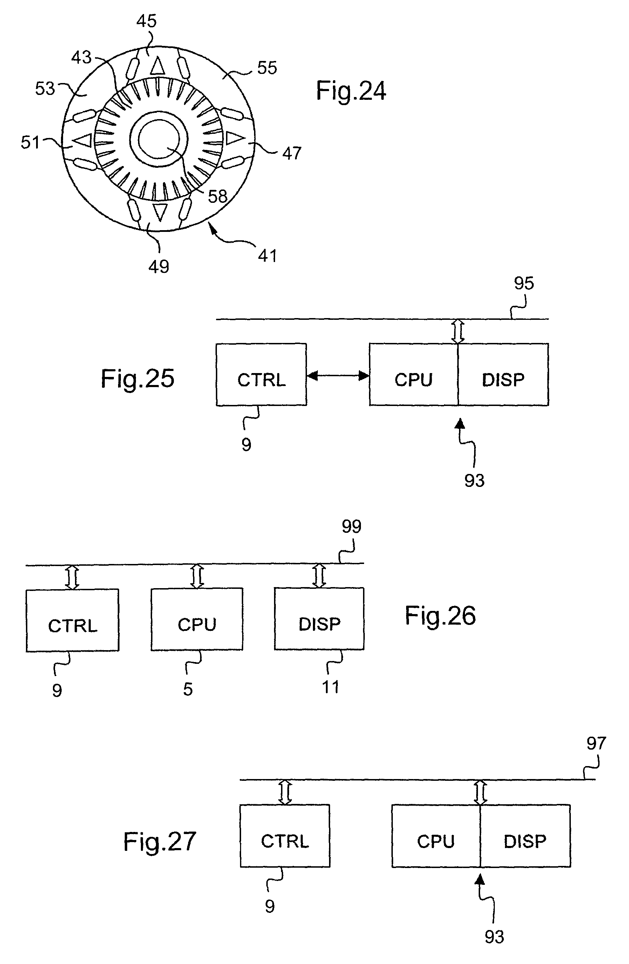

Les figures 23 et 24 illustrent une réalisation de l'organe de commande 9 de la figure 5 notamment. L'organe de commande 9 est réalisé sous la forme d'un boîtier 87, par exemple en matière plastique, sur lequel on retrouve les boutons décrits plus haut. L'allure générale du boîtier 87 suit la disposition générale des boutons de manière à présenter une surface totale relativement réduite (restreinte au maximum aux boutons). Ceci permet d'un part de réduire l'encombrement du boîtier 87 et donc de faciliter son intégration. D'autre part, la réduction de la surface du boîtier 87 évite que les doigts de l'utilisateur s'égarent sur cette surface. La réduction de la surface aide l'utilisateur à localiser de manière tactile les différents boutons. Pour faciliter le guidage des doigts au niveau des boutons, en particulier au niveau des séries de boutons 29 et 57 sont prévues deux rainures 89 et 91 au fond desquelles les boutons sont disposés. Ainsi, un doigt peut être guidé le long de chaque rainure 89 et 91 et peut passer successivement sur chaque bouton d'une série. D'une manière générale, les boutons de l'organe de commande 9 sont conformés de manière à présenter un relief pour faciliter leur localisation au toucher.

Il est également envisageable d'employer différentes rugosités pour faciliter la différenciation des boutons et de la façade.

Des variantes de réalisation peuvent être envisagées à partir des modes de réalisation précédents.

En particulier des agencements fonctionnellement différents de la centrale de commande 1 peuvent être mis en oeuvre. Par exemple, la liaison entre les appareils 3 et le calculateur 5 peut être de type BUS MOST, (pour l'expression anglaise "media oriented system transport") assurant un transport de données haut débit sur le bus de communication. Le calculateur 5 et l'organe d'affichage 11 peuvent être intégrés dans un même élément 93 comme indiqué sur la figure 25. L'élément 93 peut être relié à l'organe de commande 9 par un bus local 95, de type Lin/CAN par exemple, et aux appareils 3 (non représentés sur la figure 25) par un bus de type MOST. Dans une autre configuration, les appareils 3, l'élément 93 et l'organe de commande 9 pourraient être relié au moyen d'un bus commun 97, par exemple un BUS MOST (figure 27).

Une autre solution illustrée sur la figure 26 consisterait à prévoir un calculateur logique 5 et un calculateur graphique séparé intégré à l'organe d'affichage 11. Il pourrait alors être prévu un bus commun 99 à l'organe d'affichage 11, au calculateur (logique) 5 et à l'organe de commande 9 pour que ces éléments communiquent entre eux. Dans ce cas ledit Bus pourrait être de type MOST.

En complément de la représentation des boutons sur l'organe d'affichage 11, les différents boutons peuvent présenter des identificateurs visuels sous forme de pictogrammes ou de légendes textuelles, par exemple à destination des passagers du véhicule qui n'auraient pas accès à l'organe d'affichage. Il est également possible qu'ils soient dépourvus de tels identificateurs, le procédé de détection et l'organe d'affichage suffisant à l'identification des boutons. Des éléments de relief, par exemple de type picot, peuvent être prévus sur les boutons pour faciliter encore une identification des boutons au toucher

On remarque que dans tous les modes de réalisation décrits ci-dessus, la position des premiers boutons par rapport aux seconds boutons tend à rappeler l'organisation hiérarchique des fonctions associées à ces boutons.

La description précédente des fonctions associées aux boutons a été faite uniquement à titre d'exemple. Les affectations des fonctions aux boutons sont propres aux configurations souhaitées. Ainsi, la fonction associée à chaque bouton peut être redéfinie. Les informations associées aux boutons sont également paramétrables.

On comprendra que la nature des appareils 3 n'est pas limitée aux exemples donnés plus haut. Le nombre de boutons peut être augmenté ou diminué.

L'invention ne se limite pas aux modes de réalisation décrit ci-dessus à titre d'exemple mais englobe toutes les variantes que pourra envisager l'homme de l'art.

## Revendications

1. Centrale de commande de bord (1) pour véhicule automobile, comprenant un organe de commande (9), des boutons (13, 15), et un calculateur (5) capable de répondre à l'actionnement des boutons (13, 15) en exécutant sélectivement des fonctions de commande d'appareils de bord (3), le calculateur (5) étant apte à piloter un organe d'affichage (11) en vue d'une visualisation des boutons (13, 15) et à réagir à l'actionnement d'au moins un premier bouton (13) en ré-affectant des fonctions de commande d'appareils de bord (3) à de seconds boutons (15) agencés selon un configuration géométrique discriminante, tout en rafraîchissant la visualisation des seconds boutons (15) pour indiquer la fonction associée à ceux-ci **caractérisée en ce que** l'organe de commande (9) comprend deux couples (17, 23) distincts de premiers boutons disposés à proximité d'une première série (29) de seconds boutons et d'une seconde série (57) de seconds boutons, **en ce que** l'organe d'affichage (11) est déporté de l'organe de commande, **en ce que** le calculateur est capable de piloter l'organe d'affichage (11) de manière à afficher une visualisation des seconds boutons (15) conforme à leur configuration géométrique discriminante sur l'organe de commande (9) et capable de provoquer l'affichage d'un identifiant de la fonction associée à chacun des seconds boutons (15), **en ce que** l'organe de commande (9) comprend des moyens de détection (71) aptes à détecter la présence d'un doigt à proximité d'un bouton, lesdits moyens de détection (71) comprenant des dispositifs de détection propres à chaque bouton, et **en ce que** le calculateur (5) est capable de réagir à une telle détection en modifiant la visualisation du bouton sur l'organe d'affichage (11), la modification de la visualisation comprenant une mise en évidence de la fonction affectée au bouton, parmi les autres fonctions affichées.

2. Centrale de commande selon la revendication 1, **caractérisée en ce que** les seconds boutons (15) comprennent un organe de commande rotatif (43), dont la position est visualisée sur l'organe d'affichage (11).

3. Centrale selon la revendication 2, **caractérisée en ce que** le calculateur (5) est capable de réagir à une modification de position de l'organe de commande rotatif (43) en modifiant la valeur d'un paramètre lié à la fonction de commande d'appareils de bord (3) affectée à l'organe de commande rotatif (43) tout en rafraîchissant la visualisation de l'organe de commande rotatif (43) pour indiquer la valeur dudit paramètre.

4. Centrale selon l'une des revendications précédentes, **caractérisée en ce que** le premier bouton (19, 21, 25, 27) commande une fonction intéressant au moins un appareil parmi un dispositif de climatisation, un dispositif de communication, un dispositif de lecture audio, un dispositif d'assistance à la navigation et un dispositif de localisation du véhicule.

5. Centrale selon l'une des revendications précédentes, **caractérisée en ce** la détection est de type capacitive.

6. Centrale selon l'une des revendications précédentes, **caractérisée en ce que** la modification de la visualisation comprend une mise en évidence du bouton.

7. Centrale selon l'une des revendications précédentes, **caractérisée en ce que** le calculateur (5) comprend au moins une interface pour obtenir d'un appareil de bord des données de fonctionnement et **en ce que** la calculateur (5) est apte à réagir à une modification des données de fonctionnement en ré-affectant des fonctions de commande d'appareils de bord (3) supplémentaires aux seconds boutons (15), et en rafraîchissant la visualisation des seconds boutons (15) pour indiquer la fonction supplémentaire affectée à ceux-ci.

8. Centrale selon l'une des revendications précédentes, **caractérisée en ce que** le calculateur (5) réagit à l'actionnement du premier bouton (59) par la ré-affectation de fonctions intéressant un même appareil de bord (3) particulier aux seconds boutons (43).

9. Centrale selon l'une des revendications précédentes, **caractérisée en ce que** l'un au moins des boutons (19, 21, 25, 27) est de type poussoir.

10. Centrale selon l'une des revendications précédentes, **caractérisée en ce que** le calculateur (5) est capable de répondre à l'actionnement d'un premier bouton (19) en affectant aux seconds boutons (31, 33, 35, 37, 39) une fonction intéressant un dispositif de climatisation avec des paramètres de fonctionnement du dispositif respectivement différents.

11. Centrale selon l'une des revendications précédentes, **caractérisée en ce que** le calculateur (5) est capable de répondre à l'actionnement d'un premier bouton (21) en affectant aux seconds boutons (31, 33, 35, 37, 39) une fonction commandant une lecture de différents disques optiques respectivement.

12. Centrale selon l'une des revendications précédentes, **caractérisée en ce que** le calculateur (5) est capable de répondre à l'actionnement d'un premier bouton (21) en affectant aux seconds boutons (31, 33, 35, 37, 39) une fonction commandant le positionnement d'un tuner radio sur des stations pré-enregistrées.

13. Centrale selon l'une des revendications précédentes, **caractérisée en ce que** le calculateur (5) est capable de répondre à l'actionnement d'un premier bouton (25) en affectant aux seconds boutons (59, 61, 63, 65, 67, 69) des fonctions parmi une fonction de type carnet d'adresses, dernière destination, nouvelle destination et carte géographique.

14. Centrale selon l'une des revendications précédentes, **caractérisée en ce que** le calculateur (5) est capable de répondre à l'actionnement d'un premier bouton (27) en affectant aux seconds boutons (59, 61, 63, 65, 67, 69) des fonctions parmi une fonction de type carnet de contacts, dernier numéro de téléphone composé, composition d'un numéro de téléphone et accès à une messagerie.

15. Centrale selon l'une des revendications précédentes, **caractérisée en ce que** le premier bouton (13) est associé à une fonction particulière tandis que les seconds boutons (15) sont associés à des sous-fonctions de ladite fonction particulière.

## Claims

1. On-board control centre (1) for a motor vehicle, comprising a control member (9), buttons (13, 15), and a computer (5) capable of responding to the actuation of the buttons (13, 15) by selectively performing on-board apparatus control functions (3), the computer (5) being capable of driving a display member (11) for the purpose of a view of the buttons (13, 15) and of reacting to the actuation of at least one first button (13) by reassigning on-board apparatus control functions (3) to second buttons (15) arranged in a distinguishing geometric configuration, while refreshing the view of the second buttons (15) in order to indicate the function associated with the latter, **characterised in that** the control member (9) comprises two distinct pairs (17, 23) of first buttons placed close to a first series (29) of second buttons and to a second series (57) of second buttons, **in that** the display member (11) is remote from the control member, **in that** the computer is capable of driving the display member (11) so as to display a view of the second buttons (15) in accordance with their distinguishing geometric configuration on the control member (9) and capable of causing the display of an identifier of the function associated with each of the second buttons (15), **in that** the control member (9) comprises detection means (71) capable of detecting the presence of a finger close to a button, the said detection means (71) comprising detection devices specific to each button, and **in that** the computer (5) is capable of reacting to such a detection by modifying the view of the button on the display member (11), the modification of the view comprising the highlighting of the function assigned to the button, amongst the other displayed functions.

2. Control centre according to Claim 1, **characterized in that** the second buttons (15) comprise a rotary control member (43), of which the position is viewed on the display member (11).

3. Centre according to Claim 2, **characterized in that** the computer (5) is capable of reacting to a change of position of the rotary control member (43) by modifying the value of a parameter associated with the on-board apparatus control function (3) assigned to the rotary control member (43) while refreshing the view of the rotary control member (43) in order to indicate the value of the said parameter.

4. Centre according to one of the preceding claims, **characterized in that** the first button (19, 21, 25, 27) controls a function relating to at least one item of apparatus amongst an air conditioning device, a communication device, an audioplayback device, a navigation-assistance device and a vehicle-location device.

5. Centre according to one of the preceding claims, **characterized in that** the detection is of the capacitive type.

6. Centre according to one of the preceding claims, **characterized in that** the change of view comprises a highlighting of the button.

7. Centre according to one of the preceding claims, **characterized in that** the computer (5) comprises at least one interface for obtaining operating data from an on-board item of apparatus and **in that** the computer (5) is capable of reacting to a change in the operating data by reassigning additional on-board apparatus control functions (3) to the second buttons (15), and by refreshing the view of the second buttons (15) in order to indicate the additional function assigned to the latter.

8. Centre according to one of the preceding claims, **characterized in that** the computer (5) reacts to the actuation of the first button (59) by the reassignment of functions associated with one and the same on-board item of apparatus (3) particular to the second buttons (43).

9. Centre according to one of the preceding claims, **characterized in that** at least one of the buttons (19, 21, 25, 27) is of the pushbutton type.

10. Centre according to one of the preceding claims, **characterized in that** the computer (5) is capable of responding to the actuation of a first button (19) by assigning to the second buttons (31, 33, 35, 37, 39) a function associated with an air conditioning device with respectively different operating parameters of the device.

11. Centre according to one of the preceding claims, **characterized in that** the computer (5) is capable of responding to the actuation of a first button (21) by assigning to the second buttons (31, 33, 35, 37, 39) a function controlling a playback of various optical discs respectively.

12. Centre according to one of the preceding claims, **characterized in that** the computer (5) is capable of responding to the actuation of a first button (21) by assigning to the second buttons (31, 33, 35, 37, 39) a function controlling the positioning of a radio tuner on preset stations.

13. Centre according to one of the preceding claims, **characterized in that** the computer (5) is capable of responding to the actuation of a first button (25) by assigning to the second buttons (59, 61, 63, 65, 67, 69) functions amongst a function of the address-book, last-deatination, new-destination and geographic-map type.

14. Centre according to one of the preceding claims, **characterized in that** the computer (5) is capable of responding to the actuation of a first button (27) by assigning to the second buttons (59, 61, 63, 65, 67, 69) functions amongst a function of the contact-list, last-dialled telephone number, dialling of a telephone number and messaging-access type.

15. Centre according to one of the preceding claims, **characterized in that** the first button (13) is associated with a particular function while the second buttons (15) are associated with sub-functions of the said particular function.

## Patentansprüche

1. Kraftfahrzeug-Steuerzentrale (1), die ein Steuerorgan (9), Knöpfe (13, 15) und einen Rechner (5) enthält, der auf die Betätigung der Knöpfe (13, 15) reagieren kann, indem er selektiv Steuerfunktionen von Bordgeräten (3) ausführt, wobei der Rechner (5) ein Anzeigeorgan (11) zur optischen Anzeige der Knöpfe (13, 15) steuern und auf die Betätigung mindestens eines ersten Knopfs (13) reagieren kann, indem er Steuerfunktionen von Bordgeräten (3) zweiten Knöpfen (15) neu zuweist, die gemäß einer diskriminierenden geometrischen Konfiguration angeordnet sind, und gleichzeitig die optische Anzeige der zweiten Knöpfe (15) auffrischt, um die diesen zugeordnete Funktion anzuzeigen, **dadurch gekennzeichnet, dass** das Steuerorgan (9) zwei Paare (17, 23) von getrennten ersten Knöpfen enthält, die in der Nähe einer ersten Reihe (29) von zweiten Knöpfen und einer zweiten Reihe (57) von zweiten Knöpfen angeordnet sind, dass das Anzeigeorgan (11) aus dem Steuerorgan ausgelagert ist, dass der Rechner das Anzeigeorgan (11) so steuern kann, dass es eine optische Anzeige der zweiten Knöpfe (15) entsprechend ihrer diskriminierenden geometrischen Konfiguration auf dem Steuerorgan (9) anzeigt und die Anzeige einer Kennung der jedem der zweiten Knöpfe (15) zugeordneten Funktion bewirken kann, dass das Steuerorgan (9) Erfassungseinrichtungen (71) enthält, die das Vorhandensein eines Fingers in der Nähe eines Knopfs erfassen können, wobei die Erfassungseinrichtungen (71) jedem Knopf eigene Erfassungsvorrichtungen enthalten, und dass der Rechner (5) auf eine solche Erfassung reagieren kann, indem er die optische Anzeige des Knopfs auf dem Anzeigeorgan (11) ändert, wobei die Änderung der optischen Anzeige eine Hervorhebung der dem Knopf zugeordneten Funktion unter den anderen angezeigten Funktionen enthält.

2. Steuerzentrale nach Anspruch 1, **dadurch gekennzeichnet, dass** die zweiten Knöpfe (15) ein drehbares Steuerorgan (43) enthalten, dessen Position auf dem Anzeigeorgan (11) angezeigt wird.

3. Zentrale nach Anspruch 2, **dadurch gekennzeichnet, dass** der Rechner (5) auf eine Positionsänderung des drehbaren Steuerorgans (43) reagieren kann, indem er den Wert eines Parameters ändert, der mit der dem drehbaren Steuerorgan (43) zugeordneten Steuerfunktion von Bordgeräten (3) verbunden ist, und gleichzeitig die optische Anzeige des drehbaren Steuerorgan (43) auffrischt, um den Wert des Parameters anzuzeigen.

4. Zentrale nach einem der vorhergehenden Ansprüche, **dadurch gekennzeichnet, dass** der erste Knopf (19, 21, 25, 27) eine Funktion steuert, die mindestens ein Gerät betrifft, darunter eine Klimaanlage, eine Kommunikationsvorrichtung, eine Audio-Wiedergabevorrichtung, eine Navigationshilfevorrichtung und eine Ortungsvorrichtung des Fahrzeugs.

5. Zentrale nach einem der vorhergehenden Ansprüche, **dadurch gekennzeichnet, dass** die Erfassung vom kapazitiven Typ ist.

6. Zentrale nach einem der vorhergehenden Ansprüche, **dadurch gekennzeichnet, dass** die Änderung der optischen Anzeige eine Hervorhebung des Knopfs enthält.

7. Zentrale nach einem der vorhergehenden Ansprüche, **dadurch gekennzeichnet, dass** der Rechner (5) mindestens eine Schnittstelle enthält, um von einem Bordgerät Betriebsdaten zu erhalten, und dass der Rechner (5) auf eine Änderung der Betriebsdaten reagieren kann, indem er den zweiten Knöpfen (15) zusätzliche Steuerfunktionen von Bordgeräten (3) neu zuweist, und indem er die optische Anzeige der zweiten Knöpfe (15) auffrischt, um die diesen zugeteilte zusätzliche Funktion anzuzeigen.

8. Zentrale nach einem der vorhergehenden Ansprüche, **dadurch gekennzeichnet, dass** der Rechner (5) auf die Betätigung des ersten Knopfs (59) durch die Neuzuweisung von Funktionen reagiert, die das gleiche Bordgerät (3) betreffen, das den zweiten Knöpfen (43) eigen ist.

9. Zentrale nach einem der vorhergehenden Ansprüche, **dadurch gekennzeichnet, dass** mindestens einer der Knöpfe (19, 21, 25, 27) von der Art Druckknopf ist.

10. Zentrale nach einem der vorhergehenden Ansprüche, **dadurch gekennzeichnet, dass** der Rechner (5) auf die Betätigung eines ersten Knopfs (21) reagieren kann, indem er den zweiten Knöpfen (31, 33, 35, 37, 39) eine Funktion zuordnet, die eine Klimaanlage betrifft, mit jeweils anderen Betriebsparametern der Vorrichtung.

11. Zentrale nach einem der vorhergehenden Ansprüche, **dadurch gekennzeichnet, dass** der Rechner (5) auf die Betätigung eines ersten Knopfs (21) reagieren kann, indem er den zweiten Knöpfen (31, 33, 35, 37, 39) eine Funktion zuordnet, die ein Lesen verschiedener optischer Datenträger steuert.

12. Zentrale nach einem der vorhergehenden Ansprüche, **dadurch gekennzeichnet, dass** der Rechner (5) auf die Betätigung eines ersten Knopfs (21) reagieren kann, indem er den zweiten Knöpfen (31, 33, 35, 37, 39) eine Funktion zuordnet, die die Positionierung eines Radio-Tuners auf voreingestellte Stationen steuert.

13. Zentrale nach einem der vorhergehenden Ansprüche, **dadurch gekennzeichnet, dass** der Rechner (5) auf die Betätigung eines ersten Knopfs (25) reagieren kann, indem er den zweiten Knöpfen (59, 61, 63, 65, 67, 69) Funktionen zuweist, darunter eine Funktion vom Typ Adressbuch, letztes Ziel, neues Ziel und Landkarte.

14. Zentrale nach einem der vorhergehenden Ansprüche, **dadurch gekennzeichnet, dass** der Rechner (5) auf die Betätigung eines ersten Knopfs (27) reagieren kann, indem er den zweiten Knöpfen (59, 61, 63, 65, 67, 69) Funktionen zuweist, darunter eine Funktion der Art Kontaktadressenbuch, letzte gewählte Telefonnummer, Wählen einer Telefonnummer und Zugriff auf einen Mitteilungsdienst.

15. Zentrale nach einem der vorhergehenden Ansprüche, **dadurch gekennzeichnet, dass** der erste Knopf (13) einer besonderen Funktion zugeordnet ist, während die zweiten Knöpfe (15) Unterfunktionen der besonderen Funktion zugeordnet sind.
